(19) **Europäisches Patentamt**

**European Patent Office**

**Office européen des brevets**

(11) **EP 0 902 549 B1**

(12) **EUROPEAN PATENT SPECIFICATION**

(45) Date of publication and mention
of the grant of the patent:
**14.06.2006 Bulletin 2006/24**

(51) Int Cl.:
*H04J 13/06* *(2006.01)*     *H04B 1/707* *(2006.01)*
*H04J 13/00* *(2006.01)*

(21) Application number: **98117374.3**

(22) Date of filing: **14.09.1998**

(54) **Device and method for bi-orthogonal code hopping multiple access communication**

Gerät und Verfahren zur bi-orthogonalen Kodesprungvielfachzugriffsnachrichtenübertragung

Dispositif et appareil pour communication à acces multiple par sauts de code bi-orthogonal

(84) Designated Contracting States:
**DE FR GB IT**

(30) Priority: **13.09.1997 KR 9747454**

(43) Date of publication of application:
**17.03.1999 Bulletin 1999/11**

(73) Proprietor: **SAMSUNG ELECTRONICS CO., LTD.**
**Suwon-City, Kyungki-do (KR)**

(72) Inventor: **Park, Su-Won**
**Kwanak-gu,**
**Seoul (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**GB-A- 2 331 207        US-A- 5 432 814**
**US-A- 5 602 833**

## Description

The present invention relates to a transmitter/receiver and a transmitting/receiving method in a spread spectrum multiple access communications system, and in particular, to a transmitter/receiver and a transmitting/receiving method using bidirectional orthogonal code hopping (BDOCH) in a spread spectrum multiple access communications system.

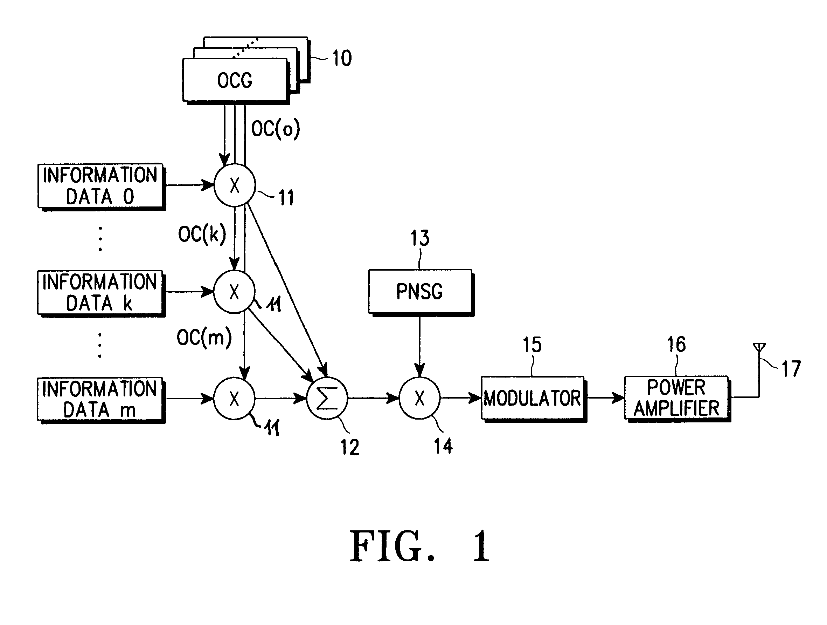

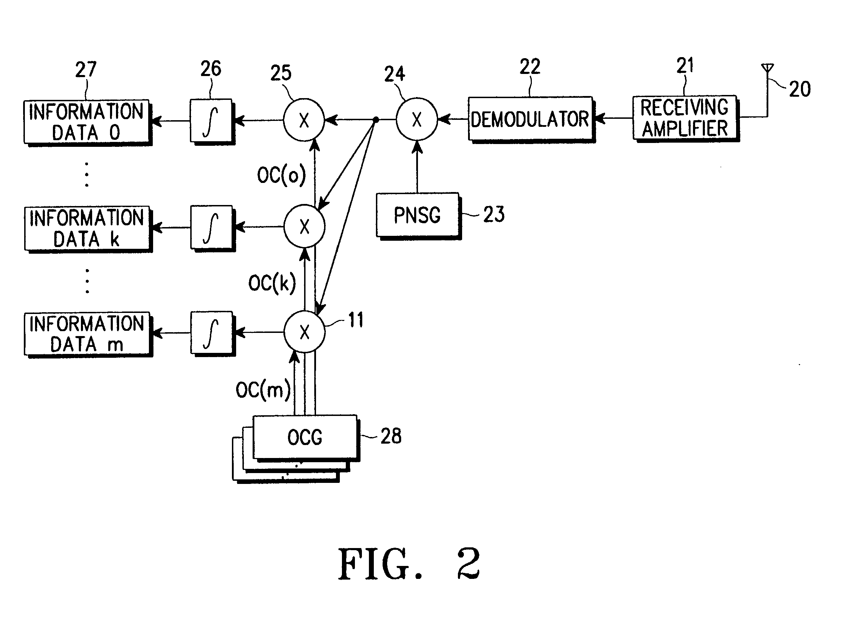

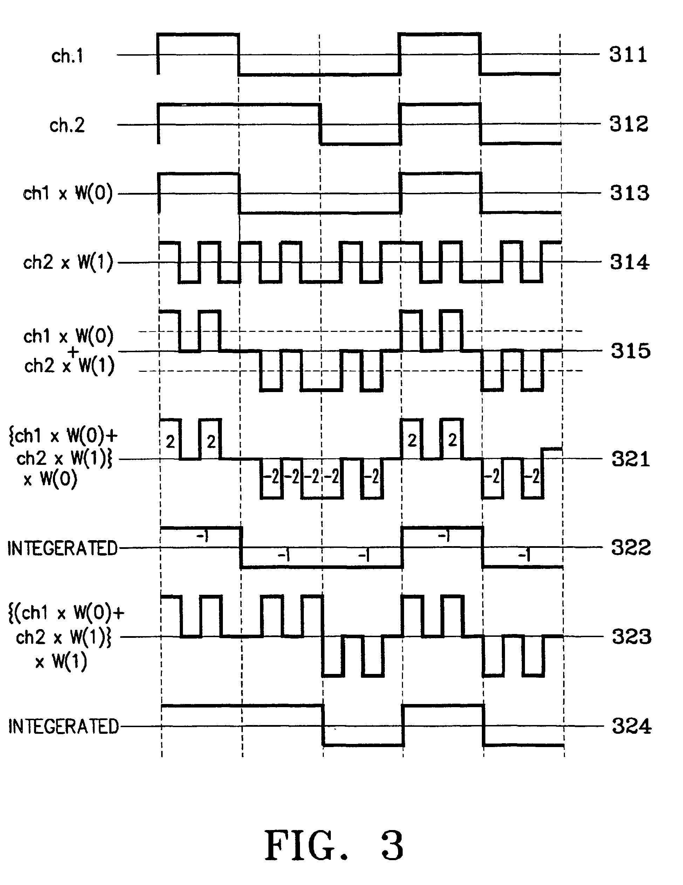

FIGs. 1 and 2 are block diagrams of a transmitter and a receiver using a conventional orthogonal code in a multiple access communications system, respectively. FIG. 3 illustrate the waveforms of the signals in the transmitter and the receiver of FIGs. 1 and 2 in the multiple access communications system.

Referring to FIG. 1, the transmitter includes orthogonal code generators (OCGs) 10 as many as channels, for providing different orthogonal codes to information data inputs 0-m on channels. Here, the orthogonal codes may be Walsh, Hadamard, or Gold codes. Each of a plurality of mixers 11 corresponding in number to the number of information data inputs mixes respective information data with an orthogonal code generated from a respective OCG 10. An adder 12 adds mixed data received from the mixers 11. A pseudo noise sequence generator (PNSG) 13 generates a PN sequence for use in producing a spread spectrum signal. A mixer 14 mixes the output of the adder 12 with the PN sequence, thereby generating the spread spectrum signal. A modulator 15 modulates the signal received from the mixer 14 to an RF (Radio Frequency) signal. A power amplifier 16 amplifies the power of the RF signal received from the modulator 15 and outputs the amplified signal via an antenna 17.

Referring to FIG. 2, the receiver has a receiving amplifier 21 for amplifying an RF signal received via an antenna 20. A demodulator 22 demodulates the signal received from the receiving amplifier 21. A PNSG 23 generates a PN sequence for use in despreading a spread spectrum signal. A mixer 24 mixes the output of the demodulator 22 with the PN sequence, thereby generating a despread signal. OCGs 28 are as many as channels and generate different orthogonal codes. The orthogonal codes may be Walsh, Hadamard, or Gold codes. Mixers 25 corresponding in number to the number of channels, each mix respective channel data with an orthogonal code generated from a respective OCG 28. Integrators 26 integrate the data received from the mixers 25 to output the respective channel information data 0-m.

The transmitter and receiver of FIGs. 1 and 2 are operated as shown in FIG. 3. It is assumed that input information data is provided on two channels ch1 and ch2 and orthogonal codes are Walsh codes given by

(Table 1)

| W(0) | +1 +1 +1 +1 |
|------|-------------|

Table continued

| W(1) | +1 -1 +1 -1 |
|------|-------------|
| W(2) | +1 +1 -1 -1 |
| W(3) | +1 -1 -1 +1 |

Referring to FIGs. 1 and 3, and table 1, information data 0 and 1 on the channels ch1 and ch2 are signals 311 and 312, respectively. A mixer 11 mixes the information data 0 with the Walsh code w(0) and generates a signal 313 (ch1xW(0)), and a mixer 11 mixes the information data 1 with the Walsh code W(1) and generates a signal 314 (ch2xW(1)). The adder 12 adds the signals 313 and 314 and generates a signal 315 (ch1xW(0)+ch2xW(1)). The mixer 14 spreads the signal 315 with a PN sequence, and the modulator 15 modulates the spread signal to an RF signal.

Referring to FIGs. 2 and 3, and table 1, the mixer 24 mixes the RF signal, received via the receiving amplifier 21 and the demodulator 22 from the transmitter, with a PN sequence, and outputs the despread signal 315 (ch1xW(0)+ch2xW(1)). Then, the mixer 25 for recovering the output of the channel ch1 mixes the signal 315 with the Walsh code W(0) and outputs a signal 321 ({ch1xW(0)+ch2xW(1)}xW(0)), and the integrator 26 for the channel ch1 integrates the signal 321 and recovers the information data 0 of the channel 1, that is, a signal 322. The mixer 25 for recovering the output of the channel ch2 mixes the signal 315 with the Walsh code W(1) and generates a signal 323 (ch1xW(0)+ch2xW(1)}xW(1)), and the integrator 26 for the channel ch2 integrates the signal 323 and recovers the information data 1 of the channel ch2, that is, a signal 324.

When the transmitter simultaneously transmits multiple channels in the conventional spread spectrum multiple access communications system, each channel should be distinguished by a different orthogonal code. That is, each channel is assigned a unique orthogonal code taken from a set of orthogonal codes to distinguish channels from one another. This spread spectrum multiple access system requires orthogonal codes as many as channels and suffers from non-uniform power density distribution on the frequency spectrum.

US-A-5 432 814 discloses a spread spectrum communications system in which a spectrum of a communications signal is spread by using a spreading signal. The described system includes PN code generators for generating a plurality of pseudo noise codes which differ from each other, and a selector for selecting the pseudo noise codes generated by the PN code generators in accordance with a pre-determined hopping pattern. The pseudo noise codes are selected by the selector being used as the spreading signal.

The object of the present invention is to provide a spread spectrum multiple access communication device and method which overcomes the above-mentioned shortcomings of the conventional systems and provides improved communication security.

To achieve the above object, there is provided a communication device using bi-orthogonal code hopping multiple access (BOCHMA) with the features of claim 1.

The object is also solved by a communication method according to claim 6.

The invention will become more apparent by describing in detail a preferred embodiment thereof with reference to the attached drawings in which:

FIG. 1 is a block diagram of a transmitter in a conventional spread spectrum multiple access communications system using an orthogonal code;

FIG. 2 is a block diagram of a receiver in the conventional spread spectrum multiple access communications system using an orthogonal code;

FIG. 3 illustrates the waveforms of signals, referred to for describing characteristics of the conventional spread spectrum multiple access communications system using an orthogonal code;

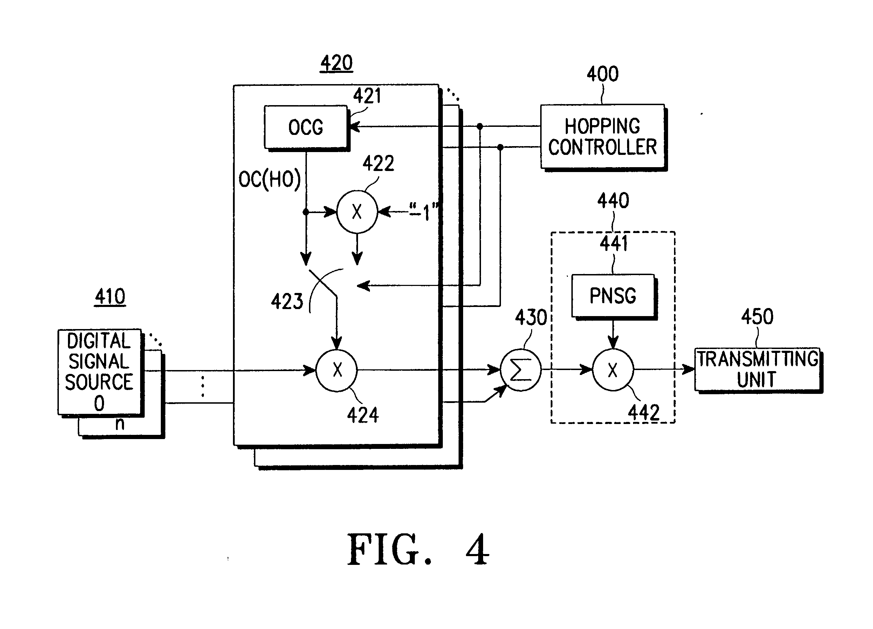

FIG. 4 is a block diagram of a transmitter in a spread spectrum multiple access communications system using bi-orthogonal code hopping according to an embodiment of the present invention;

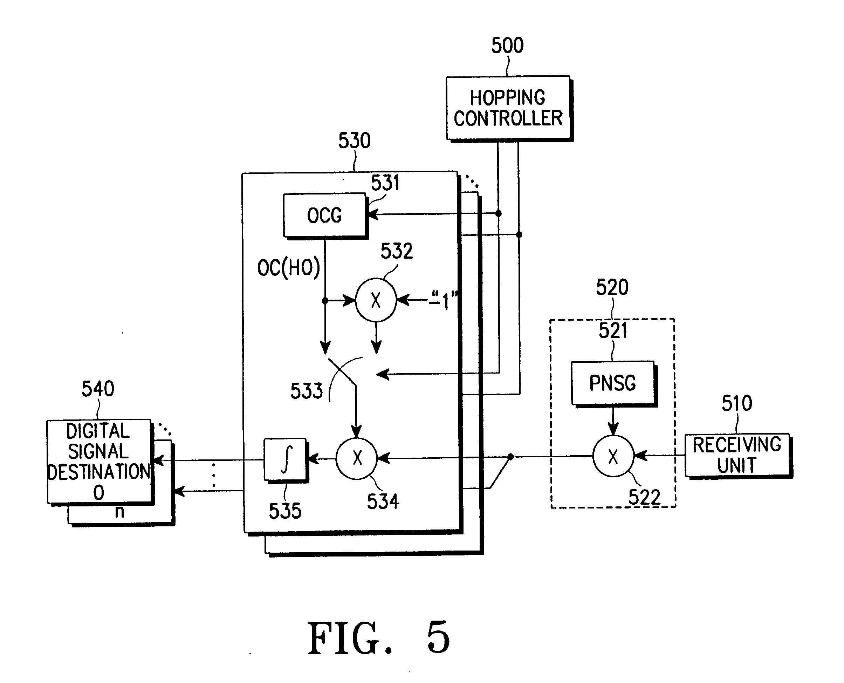

FIG. 5 is a block diagram of a receiver in the spread spectrum multiple access communications system using bi-orthogonal code hopping according to the embodiment of the present invention;

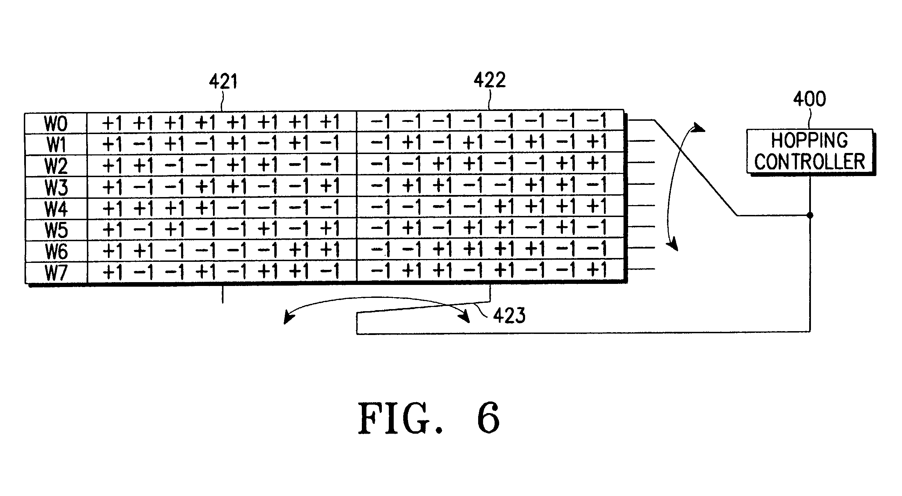

FIG. 6 illustrates Walsh codes as orthogonal codes for bi-orthogonal code hopping;

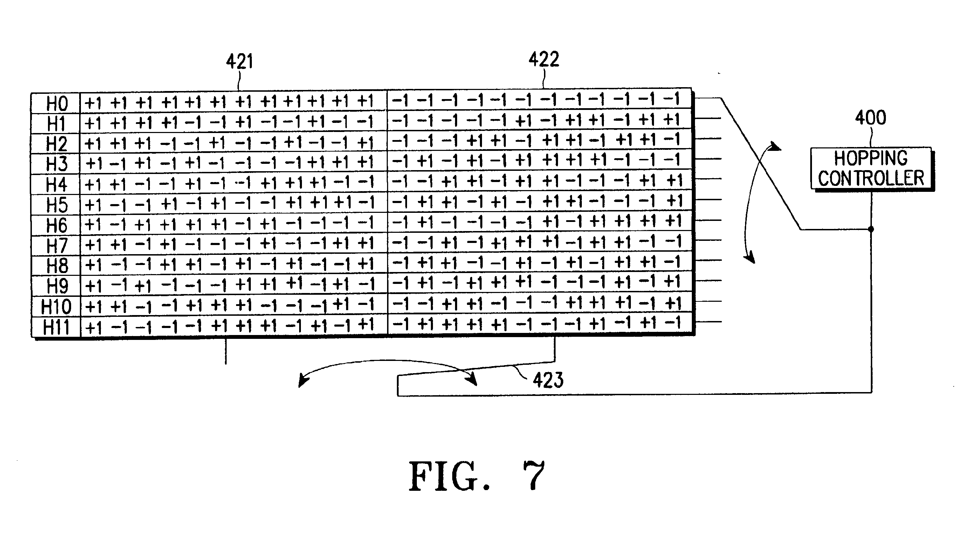

FIG. 7 illustrates Hadamard codes as orthogonal codes for bi-orthogonal code hopping; and

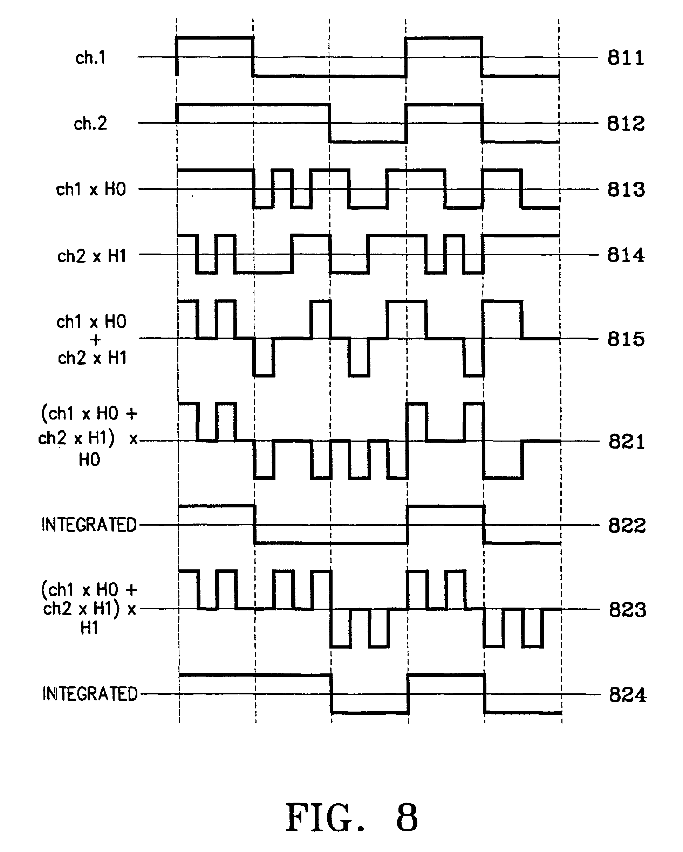

FIG. 8 illustrates the waveforms of signals in the spread spectrum multiple access communications system using bi-orthogonal code hopping according to the embodiment of the present invention.

Use of orthogonal code hopping multiple access (OCHMA) allows each channel to be multiplied not by a fixed orthogonal code but by different orthogonal codes according to a hopping pattern, with mutual orthogonality maintained. If a signal spread by the orthogonal code hopping is not multiplied by a PN sequence or a wiretapper acquires the PN sequence of a base station and removes the PN sequence from a signal spread by the orthogonal code hopping and multiplied by the PN sequence, the OCHMA has the following problem.

When a wiretapper knows the size and kind of orthogonal codes used in a transmitter and the starting and ending points of each orthogonal code, the wiretapper can find out encoded channel data before it is multiplied by an orthogonal code just by checking particular chips of the orthogonal code despite orthogonal code hopping, as long as the wiretapper can accurately decipher each orthogonal code to the chip though an orthogonal code hopping pattern is not known.

Walsh and Hadamard codes are constructed as shown in tables 2 and 3, respectively.

(Table 2)

| W0 | +1 +1 +1 +1 +1 +1 +1 +1 |
|----|--------------------------|
| W1 | +1 -1 +1 -1 +1 -1 +1 -1 |
| W2 | +1 +1 -1 -1 +1 +1 -1 -1 |
| W3 | +1 -1 -1 +1 +1 -1 -1 +1 |
| W4 | +1 +1 +1 +1 -1 -1 -1 -1 |
| W5 | +1 -1 +1 -1 -1 +1 -1 +1 |
| W6 | +1 +1 -1 -1 -1 -1 +1 +1 |
| W7 | +1 -1 -1 +1 -1 +1 +1 -1 |

(Table 3)

| H0 | +1 +1 +1 +1 +1 +1 +1 +1 +1 +1 +1 +1 |
|-----|--------------------------------------|
| H1 | +1 +1 +1 +1 -1 -1 +1 -1 -1 +1 -1 -1 |
| H2 | +1 +1 +1 -1 -1 +1 -1 -1 +1 -1 -1 +1 |
| H3 | +1 -1 +1 -1 +1 -1 -1 -1 -1 +1 +1 +1 |
| H4 | +1 +1 -1 -1 +1 -1 -1 +1 +1 +1 -1 -1 |
| H5 | -1 +1 +1 -1 +1 -1 +1 +1 -1 -1 -1 +1 |
| H6 | +1 -1 +1 +1 +1 +1 -1 +1 -1 -1 -1 -1 |
| H7 | +1 +1 -1 +1 -1 -1 -1 +1 -1 -1 +1 +1 |
| H8 | -1 +1 +1 -1 -1 +1 -1 +1 -1 +1 +1 -1 |
| H9 | +1 -1 +1 -1 -1 -1 +1 +1 +1 -1 +1 -1 |
| H10 | +1 +1 -1 -1 +1 +1 +1 -1 -1 -1 +1 -1 |
| H11 | -1 +1 +1 +1 +1 -1 -1 -1 +1 -1 +1 -1 |

Referring to tables 2 and 3, orthogonal codes of a length N can be generated so that the same numbered chips in the orthogonal codes have the same value, like the +1 s marked bold at the first chips in table 2. In the case of the different signs of the first chips as marked bold in table 3, the signs can be changed to be equal by multiplying the chips of the underlined orthogonal codes by -1 and thus changing the sign of each chip, while maintaining mutual orthogonality of the codes given by

$$\frac{1}{N}\sum_{n=1}^{N} a_i(n)a_j(n) = \begin{bmatrix} 0(i \neq j) \\ 1(i = j) \end{bmatrix} \dots (1)$$

In the above case, the orthogonal codes can be deciphered just by determining the signs of the first chips. Therefore, it is desirable to form orthogonal code pairs, in which each orthogonal code has different values at any chip from the other code of its pair.

In an embodiment of the present invention, a communication device and method using bi-orthogonal code hopping will be provided to offer communication security in any situation.

FIG. 4 is a block diagram of a transmitter in a communication device using bi-orthogonal code hopping according to the embodiment of the present invention.

Referring to FIG. 4, a hopping controller 400 generates hopping control signals for hopping orthogonal codes selected from a set of orthogonal codes according to a predetermined pattern for respective channels. The hopping control signals correspond in number to the number of the transmission channels and are composed of hopping code generating signals and hopping code selecting signals for hopping bi-orthogonal codes taken from a set of bi-orthogonal codes according to a preset pattern for each channel. The number of the digital signal sources 410 is also equal to that of the channels.

In each of code hoppers 420 equal in number to that of the digital signal sources, an OCG 421 generates an orthogonal code OC(Hx) (x is a channel number) corresponding to a hopping code generating signal for a channel received from the hopping controller 400. A multiplier 422 multiplies the orthogonal code OC(Hx) by -1 and generates a code /OC(Hx) being the complement of OC(Hx). A switch 423 selectively outputs the orthogonal code OC(Hx) or /OC(Hx) according to a hopping code selecting signal received from the hopping controller 400. A mixer 424 mixes a digital signal source 410 with the orthogonal code received from the switch 423.

An adder 430 adds up the signals received from each of the code hoppers 420. A spreader 440 includes a PNSG 441 for generating a PN sequence with which to spread a transmission signal, and a mixer 442 for mixing the output of the adder 430 with the PN sequence. A transmitting unit 450 includes a modulator, a filter, and an amplifier, for outputting the transmission signal as an RF signal.

FIG. 5 is a block diagram of a receiver in the communications system using bi-orthogonal code hopping according to the embodiment of the present invention.

Referring to FIG. 5, a receiving unit 510 includes a demodulator, a filter, and an amplifier, for outputting an input RF signal as a baseband signal. A despreader 520 has a PNSG 521 for generating a PN sequence with which to despread the received spread signal, and a mixer 522 for mixing the output of the receiving unit 510 with the PN sequence and generates a despread signal.

A hopping controller 500 generates hopping control signals for providing orthogonal codes according to a predetermined hopping rule to recover the digital signals on the channels. The hopping control signals are equal in number to that of the transmission channels and composed of hopping code generating signals and hopping code selecting signals for hopping bi-orthogonal codes taken from a set of bi-orthogonal codes according to a preset pattern for each channel. The hopping control signals are the same as those generated from the hopping controller 400 in the transmitter. That is, the hopping controllers 400 and 500 generate the same hopping control signal for a particular channel.

In each of code hoppers 530 equal in number to that of digital signal destinations 540, an OCG 531 generates an orthogonal code OC(Hx) corresponding to a hopping code generating signal for a channel received from the hopping controller 500. A multiplier 532 multiplies the orthogonal code OC(Hx) by -1 and generates a code /OC(Hx) being the complement of OC(Hx). A switch 533 selectively outputs the orthogonal code OC(Hx) or /OC(Hx) according to a hopping code selecting signal received from the hopping controller 500. A mixer 534 mixes the output of the despreader 520 with the orthogonal code received from the switch 533. An integrator 535 integrates the output of the mixer 534, thereby recovering the digital signals and outputting them to their respective digital signal destinations 540.

The transmitter of FIG. 4 simultaneously transmits a plurality of digital signals on a single communication channel and the receiver of FIG. 5 selects a desired signal from a plurality of input signals. In the embodiment of the present invention, the transmitter and receiver use hopping patterns of bi-orthogonal codes to distinguish channels from one another. With a set of orthogonal codes used in OCHMA given as {OC(1), OC(2), OC(3), ..., OC(N)}, a set of bi-orthogonal codes is {OC(1), /OC(1), OC(2), /OC(2), OC(3), /OC(3), ..., OC(N), /OC(N)} with respect to the orthogonal code set, where /OC(N) denotes the complement of OC(N), that is, an inverted output corresponding to OC(N).

The transmitter of FIG. 4 is provided with the code hoppers 420 equal in number to that of the channels, and each code hopper 420 multiplies the digital signal source of a respective channel by orthogonal codes generated and selected by hopping control signals received from the hopping controller 400, thereby distinguishing the channels from another. Orthogonal codes generated from a code hopper 530 in the receiver of Fig. 5 are identical to those multiplied by a respective channel for transmission. That is, the hopping controllers 400 and 500 generate the same hopping control signals for one and the same channel.

FIGs. 6 and 7 illustrate exemplary orthogonal codes generated in the code hoppers 420. From the orthogonal codes shown in FIGs. 6 and 7, orthogonal codes to be mixed are selected by means of the same hopping control signal output from the hopping controllers 400 and 500 based on a predetermination made between the transmitter and the receiver. Here, two hopping patterns used in the transmitter should not include the same orthogonal code at a particular time to prevent their collision.

FIG. 8 illustrates the waveforms of signals, referred to for describing the operational characteristics of the communication device using BOCHMA. It is assumed that input information data is provided on two channels ch1 and ch2 and Walsh codes as constructed below are used here as orthogonal codes.

(Table 4)

| W0 | +1 +1 +1 +1 | /W0 | -1 -1 -1 -1 |
| W1 | +1 -1 +1 -1 | /W1 | -1 +1 -1 +1 |
| W2 | +1 +1 -1 -1 | /W2 | -1 -1 +1 +1 |
| W3 | +1 -1 -1 +1 | /W3 | -1 +1 +1 -1 |

Referring to FIGs. 4 and 5, and table 4, information data 0 on the channel ch1 and information data 1 on the channel ch2 are signals 811 and 812, respectively. Orthogonal codes for the channel ch1 are hopped in the order of W(0), W(1), /W(3), and W(2), and those for the channel ch2 are hopped in the order of W(1), /W(2), W(2), and W(1). Here, an orthogonal code can occur twice for a channel. The hopping controller 400 outputs hopping control signals for generating and selecting the bi-orthogonal codes designated as above.

Then, the code hopper 420 for the channel ch1 receives hopping code generating signals in the order of W(0), W(1), W(3), and W(2) from the hopping controller 400, and hopping code selecting signals for switching in the order of 1101. The OCG 421 in the code hopper 420 generates the orthogonal codes W(0), W(1), W(3), and W(2) and the switch 423 selects the output of the multiplier 422 at the location of the orthogonal code W(3). Therefore, the mixer 424 receives a hopped orthogonal code H0 including W(0), W(1), /W(3), and W(2). On the other hand, the code hopper 420 for the channel ch2 receives hopping code generating signals in the order of W(1), W(2), W(2), and W(1) from the hopping controller 400, and hopping code selecting signals for switching in the order of 1011. The OCG 421 in the code hopper 420 generates the orthogonal codes W(1), W(2), W(2), and W(1) and the switch 423 selects the output of the multiplier 422 at the location of the former of the orthogonal codes W(2). Therefore, the mixer 424 receives a hopped orthogonal code H1 including W(1), /W(2), /W(2), and W(1).

Then, the mixer 424 mixes the information data 0 with the hopped orthogonal code H0 and generates a signal 813 (ch1xH0). It also mixes the information data 1 with the hopped orthogonal code H1 and generates a signal 814 (ch2xH1). The adder 430 adds the signals 813 and 814 and generates a signal 815 (ch1xH0+ch2xH1). The mixer 442 mixes the signal 815 with a PN sequence and the transmitting unit 450 converts the spread signal received from the mixer 442 to an RF signal for transmission.

The spectrum despreader 520 mixes the RF signal received from the transmitter via the receiving unit 510 with the PN sequence, and generates the despread signal 815 (ch1xH0+ch2xH1). It is to be noted that the hopping controller 500 should generate the same hopping control signals as from the hopping controller 400. That is, the transmitter and receiver use the same bi-orthogonal codes for a channel.

Thus, the switch 533 for the channel ch1 outputs the hopped orthogonal code H0, and the switch 533 for the channel ch2 outputs the hopped orthogonal code H1. Then, the mixer 534 for the channel ch1 mixes the hopped orthogonal code H0 with the signal 815 received from the despreader 520, and generates a signal 821 ((ch1xH0+ch2xH1)xH0). The integrator 535 for the channel ch1 integrates the signal 821 and recovers the information data 822 of the channel ch1. The mixer 534 for the channel ch2 mixes the hopped orthogonal code H1 with the signal 815 received from the despreader 520, and generates a signal 823 ((ch1xH0+ch2xH1)xH1). The integrator 535 for the channel ch2 integrates the signal 823 and recovers the information data 824 of the channel ch2.

As described above, BOCHMA produces two kinds of selectable codes with the same spreading gain with respect to each orthogonal code, thereby preventing wiretapping and improving communication security.

**Claims**

1. A communication device using bi-orthogonal code hopping multiple access (BOCHMA), comprising:

    a transmitter including a hopping controller (400) for generating bi-orthogonal codes taken from a set of bi-orthogonal codes according to a predetermined hopping pattern for each channel to distinguish channels from one another,
    a mixer (424) for mixing the hopped bi-orthogonal code with the digital signals of a respective channel,
    an adder (430) for adding the mixed signals of the channels; and
    a receiver for receiving the added signal from the transmitter including a hopping controller (500) for hopping the same bi-orthogonal codes as in the transmitter for a respective channel, and means (520, 530) for recovering the digital signals of the channels.

2. The device of claim 1, comprising further transmitters, wherein the number of transmitters is equal to a number of transmission channels, the device further comprising:

   a plurality of orthogonal code generators (421) for generating for each respective channel orthogonal codes which are selected from a set of orthogonal codes and hopped according to predetermined hopping patterns;
   means (422) for changing the signs of the bits received from the orthogonal code generators (421) and generating bi-orthogonal codes; and
   a plurality of switches (423) for selecting the outputs of the orthogonal code generators (421) or the sign-changed orthogonal codes according to a predetermined selection signal and providing the selected signal to the respective mixer (424).

3. The device of claim 1 or 2, comprising further receivers, wherein the number of receivers is equal to the number of reception channels, the device further comprising:

   a plurality of orthogonal code generators (531) for generating for each respective channel orthogonal codes which are selected from a set of orthogonal codes and hopped according to predetermined hopping patterns;
   means (532) for changing the signs of the bits received from the orthogonal code generators (531) and generating bi-orthogonal codes;
   a plurality of switches (533) for selecting the outputs of the orthogonal code generators (531) or the sign-changed orthogonal codes according to a predetermined selection signal;
   a plurality of mixers (534) for mixing input signals with the outputs of the switches (533); and
   a plurality of integrators (535) for recovering the input signals by integrating the outputs of the mixers (534).

4. The device of one of claims 2 or 3, wherein each of the transmitters further comprises a plurality of code hoppers (420) being equal in number to that of the transmission channels, for generating the bi-orthogonal codes under the control of the hopping controller (400); and
   a spreader for mixing the output of the adder (430) with a PN code.

5. The device of one of claims 1 to 4, wherein the receiver further includes:

   a despreader for mixing the input signal with a PN code; and
   a plurality of code hoppers (530) for generating bi-orthogonal codes hopped in the same manner as the hopped bi-orthogonal codes mixed with the received signals and recovering the digital signals, under the control of the hopping controller (500).

6. A communication method using bi-orthogonal code hopping multiple access (BOCHMA), comprising the steps of:

   (1) generating bi-orthogonal codes selected from a set of bi-orthogonal codes according to predetermined hopping patterns for respective channels, to distinguish the channels from one another, mixing the hopped bi-orthogonal codes with digital signals of the channels, and outputting the mixed signal on a transmitting end;
   (2) receiving the signal including multiple channel signals, hopping bi-orthogonal codes selected from a set of bi-orthogonal codes in the same manner as in the transmitting end, and recovering the digital signals in a receiving end.

7. The method according to claim 6, wherein step (1) includes the following steps:

   (3) adding code-hopped signals in the transmitter;
   (4) mixing the output of the adder with a PN code in the transmitter;
   (5) despreading an input signal with a PN code in a receiver; and

   step (2) further includes the following step (6) of mixing the despread signal with the hopped bi-orthogonal codes.

8. The method of claim 6 or 7, wherein step (1) comprises the steps of:

   generating orthogonal codes from a set of orthogonal codes according to a predetermined hopping pattern for a corresponding channel;
   generating bi-orthogonal codes by changing the signs of the orthogonal codes;
   selectively outputting the orthogonal codes or the sign-changed orthogonal codes; and
   mixing an input signal of the corresponding channel with the selected orthogonal codes.

9. The method of claim 7 or 8, wherein step (6) further comprises the steps of:

   generating orthogonal codes from a set of orthogonal codes according to a predetermined hopping pattern for a corresponding channel;
   generating bi-orthogonal codes by changing the signs of the orthogonal codes;
   selectively outputting the orthogonal codes and the sign-changed orthogonal codes;
mixing the despread signal with the selected orthogonal codes; and
recovering an input signal by integrating the mixed signal.

**Patentansprüche**

1.  Kommunikationsvorrichtung, die Bi-Orthogonal Code Hopping Multiple Access (BOCHMA) einsetzt, wobei sie umfasst:

    einen Sender mit einer Sprung-Steuereinrichtung (400) zum Erzeugen von Bi-Orthogonalcodes, die gemäß einem voreingegebenen Sprung-Schema einem Satz von Bi-Orthogonalcodes entnommen werden, für jeden Kanal, um Kanäle voneinander zu unterscheiden,
    einen Mischer (424) zum Mischen des durchgewechselten Bi-Orthogonalcodes mit den digitalen Signalen eines jeweiligen Kanals,
    eine Addiereinrichtung (430) zum Addieren der gemischten Signale der Kanäle; und
    ein Empfänger zum Empfangen des addierten Signals von dem Sender, der eine Sprung-Steuereinrichtung (500) zum Durchwechseln der Bi-Orthogonalcodes wie in dem Sender für einen jeweiligen Kanal und eine Einrichtung (520, 530) zum Wiedergewinnen der digitalen Signale der Kanäle enthält.

2.  Vorrichtung nach Anspruch 1, die des Weiteren Sender umfasst, wobei die Anzahl von Sendern der Anzahl von Sendekanälen gleich ist und die Vorrichtung des Weiteren umfasst:

    eine Vielzahl von Orthogonalcode-Generatoren (421) zum Erzeugen von Orthogonalcodes, die aus einem Satz von Orthogonalcodes ausgewählt werden und gemäß vorgegebenen Sprung-Schemata durchgewechselt werden, für jeden jeweiligen Kanal;
    eine Einrichtung (422) zum Ändern der Vorzeichen der von den Orthogonalcode-Generatoren (421) empfangenen Bits und zum Erzeugen von Bi-Orthogonalcodes; und
    eine Vielzahl von Schaltern (423) zum Auswählen der Ausgänge der Orthogonalcode-Generatoren (421) oder der Orthogonalcodes mit geändertem Vorzeichen gemäß einem vorgegebenen Auswählsignal und zum Bereitstellen des ausgewählten Signals für den jeweiligen Mischer (424).

3.  Vorrichtung nach Anspruch 1 oder 2, die des Weiteren Empfänger umfasst, wobei die Anzahl der Empfänger der Anzahl von Empfangskanälen gleich ist und die Vorrichtung des Weiteren umfasst:

    eine Vielzahl von Orthogonalcode-Generatoren (531) zum Erzeugen von Orthogonalcodes, die aus einem Satz von Orthogonalcodes ausgewählt werden und gemäß vorgegebener Sprung-Schemata durchgewechselt werden, für jeden jeweiligen Kanal;
    eine Einrichtung (532) zum Ändern der Vorzeichen der von den Orthogonalcode-Generatoren (531) empfangenen Bits und zum Erzeugen von Bi-Orthogonalcodes;
    eine Vielzahl von Schaltern (539) zum Auswählen der Ausgänge der Orthogonalcode-Generatoren (531) oder der Orthogonalcodes mit geändertem Vorzeichen gemäß einem vorgegebenen Auswählsignal;
    eine Vielzahl von Mischern (534) zum Mischen von Eingangssignalen mit den Ausgängen der Schalter (533); und
    eine Vielzahl von Integratoren (535) zum Wiedergewinnen der Eingangsignale durch Integrieren der Ausgänge der Mischer (534).

4.  Vorrichtung nach einem der Ansprüche 2 oder 3, wobei jeder der Sender des Weiteren eine Vielzahl von Code-Sprungeinrichtungen (420), deren Anzahl der der Sendekanäle gleich ist, zum von der Sprung-Steuereinrichtung (400) gesteuerten Erzeugen der Bi-Orthogonalcodes umfasst; und
    eine Spreizeinrichtung zum Mischen des Ausgangs der Addiereinrichtung (430) mit einem PN-Code.

5.  Vorrichtung nach einem der Ansprüche 1 bis 4, wobei der Empfänger des Weiteren enthält:

    einen Entspreizer zum Mischen des Eingangssignals mit einem PN-Code; und
    eine Vielzahl von Code-Sprungeinrichtung (530) zum Erzeugen von Bi-Orthogonalcodes, die auf die gleiche Weise wie die durchgewechselten Bi-Orthogonalcodes, die mit den empfangenen Signalen gemischt werden, durchgewechselt werden, und zum Zurückgewinnen der digitalen Signalen gesteuert von der Sprung-Steuereinrichtung (500).

6.  Kommunikationsverfahren, bei dem Bi-Orthogonal Code Hopping Multiple Access (BOCHMA) eingesetzt wird und das die folgenden Schritte umfasst:

    (1) Erzeugen von Bi-Orthogonalcodes, die gemäß vorgegebener Sprung-Schemata aus einem Satz von Bi-Orthogonalcodes ausgewählt werden, für jeweilige Kanäle, um die Kanäle voneinander zu unterscheiden, Mischen der durchgewechselten Bi-Orthogonalcodes mit digitalen Signalen der Kanäle und Ausgeben des gemischten Signals an einer sendenden Seite; (2) Empfangen des Signals, das Mehrfach-Kanalsignale enthält, Durchwechseln von Bi-Orthogonalcodes, die aus einem Satz von Bi-Orthogonalcodes auf die gleiche Weise wie an der sendenden Seite ausgewählt werden, und Wiedergewinnen der digitalen Signale an einer empfangenden Seite.

7. Verfahren nach Anspruch 6, wobei Schritt (1) die folgenden Schritte einschließt:

(3) Addieren der Code-durchgewechselten Signale in dem Sender;
(4) Mischen des Ausgangs der Addiereinrichtung mit einem PN-Code in dem Sender;
(5) Entspreizen eines Eingangssignals mit einem PN-Code in einem Empfänger; und

wobei Schritt (2) des Weiteren den folgenden Schritt (6) des Mischens des entspreizten Signals mit den durchgewechselten Bi-Orthogonalcodes einschließt.

8. Verfahren nach Anspruch 6 oder 7, wobei Schritt (1) die folgenden Schritte umfasst:

Erzeugen von Orthogonalcodes aus einem Satz von Orthogonalcodes gemäß einem vorgegebenen Sprung-Schema für einen entsprechenden Kanal;
Erzeugen von Bi-Orthogonalcodes durch Ändern der Vorzeichen der Orthogonalcodes;
selektives Ausgeben der Orthogonalcodes oder der Orthogonalcodes mit geändertem Vorzeichen; und
Mischen eines Eingangssignals des entsprechenden Kanals mit den ausgewählten Orthogonalcodes.

9. Verfahren nach Anspruch 7 oder 8, wobei Schritt (6) des Weiteren die folgenden Schritte umfasst:

Erzeugen von Orthogonalcodes aus einem Satz von Orthogonalcodes gemäß einem vorgegebenen Sprung-Schema für einen entsprechenden Kanal;
Erzeugen von Bi-Orthogonalcodes durch Ändern der Vorzeichen der Orthogonalcodes;
selektives Ausgeben der Orthogonalcodes und der Orthogonalcodes mit geänderten Vorzeichen;
Mischen des entspreizten Signals mit den ausgewählten Orthogonalcodes; und
Wiedergewinnen eines Eingangssignals durch Integrieren des gemischten Signals.

**Revendications**

1. Dispositif de télécommunication utilisant l'accès multiple à saut de code bi-orthogonal (bi-orthogonal code-hopping multiple access, BOCHMA), comportant :

un émetteur comprenant une unité de commande de saut (400) servant à produire des codes bi-orthogonaux pris, pour chaque canal, parmi un ensemble de codes bi-orthogonaux selon un schéma de saut prédéterminé afin de distinguer les canaux les uns des autres ;
un changeur de fréquence (424) servant à mélanger le code bi-orthogonal à saut de valeur avec les signaux numériques d'un canal donné ;
un additionneur (430) servant à additionner les signaux mélangés des canaux ; et
un récepteur servant à recevoir le signal additionné issu de l'émetteur, comprenant une unité de commande de saut (500) servant à utiliser les mêmes codes bi-orthogonaux à saut de valeur que dans l'émetteur pour un canal donné ainsi que des moyens (520, 530) servant à reconstituer les signaux numériques des canaux.

2. Dispositif selon la revendication 1 comportant des émetteurs supplémentaires, dans lequel le nombre d'émetteurs est égal à un nombre de canaux de transmission, le dispositif comportant, de plus :

une pluralité de générateurs de codes orthogonaux (421) servant à produire, pour chaque canal donné, des codes orthogonaux qui sont sélectionnés parmi un ensemble de codes orthogonaux et qui varient selon des schémas de saut prédéterminés ;
des moyens (422) servant à changer les signes des binaires (bits) reçus en provenance des générateurs de codes orthogonaux (421) et à produire des codes bi-orthogonaux ; et
une pluralité de commutateurs (423) servant à sélectionner les sorties des générateurs de codes orthogonaux (421) ou les codes orthogonaux à signe changé selon un signal de sélection prédéterminé et à fournir le signal sélectionné au changeur de fréquence concerné (424).

3. Dispositif selon la revendication 1 ou 2 comportant des récepteurs supplémentaires, dans lequel le nombre de récepteurs est égal au nombre de canaux de réception, le dispositif comportant, de plus :

une pluralité de générateurs de codes orthogonaux (531) servant à produire, pour chaque canal donné, des codes orthogonaux qui sont sélectionnés parmi un ensemble de codes orthogonaux et qui varient selon des schémas de saut prédéterminés ;

des moyens (532) servant à changer les signes des binaires reçus en provenance des générateurs de codes orthogonaux (531) et à produire des codes bi-orthogonaux ;

une pluralité de commutateurs (533) servant à sélectionner les sorties des générateurs de codes orthogonaux (531) ou les codes orthogonaux à signe changé selon un signal de sélection prédéterminé ;

une pluralité de changeurs de fréquence (534) servant à mélanger les signaux d'entrée avec les sorties des commutateurs (533) ; et

une pluralité d'intégrateurs (535) servant à reconstituer les signaux d'entrée en intégrant les sorties des changeurs de fréquence (534).

4. Dispositif selon l'une des revendications 2 ou 3, dans lequel chacun des émetteurs comprend, de plus :

une pluralité de dispositifs de saut de code (420), qui est égale en nombre à celle des canaux de transmission, servant à produire les codes bi-orthogonaux sous la maîtrise de l'unité de commande de saut (400) ; et

un dispositif d'étalement servant à mélanger la sortie de l'additionneur (430) avec un code de bruit pseudo-aléatoire.

5. Dispositif selon l'une des revendications 1 à 4, dans lequel le récepteur comprend, de plus :

un dispositif de désétalement servant à mélanger le signal d'entrée avec un code de bruit pseudo-aléatoire ; et

une pluralité de dispositifs de saut de code (530) servant à produire des codes bi-orthogonaux à saut de valeur qui varient de la même manière que les codes bi-orthogonaux à saut de valeur mélangés avec les signaux reçus, et à reconstituer les signaux numériques, et ce, sous la maîtrise de l'unité de commande de saut (500).

6. Procédé de télécommunication utilisant l'accès multiple à saut de code bi-orthogonal (BOCHMA), comportant les étapes suivantes :

(1) production de codes bi-orthogonaux sélectionnés parmi un ensemble de codes bi-orthogonaux, selon des schémas de saut prédéterminés, pour des canaux respectifs afin de distinguer les canaux les uns des autres ; mélange des codes bi-orthogonaux à saut de valeur avec les signaux numériques des canaux ; et sortie du signal mélangé à une extrémité émettrice ;

(2) réception du signal comprenant des signaux de canaux multiples ; saut de valeur des codes bi-orthogonaux sélectionnés parmi un ensemble de codes bi-orthogonaux de la même manière que dans l'extrémité émettrice ; et reconstitution des signaux numériques dans une extrémité réceptrice.

7. Procédé selon la revendication 6, dans lequel l'étape (1) comprend les étapes suivantes :

(3) addition des signaux à saut de valeur de code dans l'émetteur ;

(4) mélange de la sortie de l'additionneur avec un code de bruit pseudo-aléatoire dans l'émetteur ;

(5) désétalement d'un signal d'entrée avec un code de bruit pseudo-aléatoire dans un récepteur ; et

dans lequel l'étape (2) comprend l'étape supplémentaire suivante (6) qui consiste à mélanger le signal désétalé avec les codes bi-orthogonaux à saut de valeur.

8. Procédé selon la revendication 6 ou 7, dans lequel l'étape (1) comprend les étapes suivantes :

production, pour un canal correspondant, de codes orthogonaux à partir d'un ensemble de codes orthogonaux selon un schéma de saut prédéterminé ;

production de codes bi-orthogonaux en changeant les signes des codes orthogonaux ;

sortie, de manière sélective, des codes orthogonaux ou des codes orthogonaux à signe changé ; et

mélange d'un signal d'entrée du canal correspondant avec les codes orthogonaux sélectionnés.

9. Procédé selon la revendication 7 ou 8, dans lequel l'étape (6) comprend les étapes suivantes :

production, pour un canal correspondant, de codes orthogonaux à partir d'un ensemble de codes orthogonaux selon un schéma de saut prédéterminé ;

production de codes bi-orthogonaux en changeant les signes des codes orthogonaux ;

sortie, de manière sélective, des codes orthogonaux et des codes orthogonaux à signe changé ;

mélange du signal désétalé avec les codes orthogonaux sélectionnés ; et

reconstitution d'un signal d'entrée en intégrant le signal mélangé.

**FIG. 1**

INFORMATION DATA 0 ... INFORMATION DATA k ... INFORMATION DATA m

OCG — 10

OC(o)

OC(k)

OC(m)

X — 11

Σ — 12

PNSG — 13

X — 14

MODULATOR — 15

POWER AMPLIFIER — 16

— 17

FIG. 2

FIG. 3

FIG. 4

FIG. 5

|     |  421  |  422  |
|-----|-------|-------|
| W0  | +1 +1 +1 +1 +1 +1 +1 +1 | −1 −1 −1 −1 −1 −1 −1 −1 |
| W1  | +1 −1 +1 −1 +1 −1 +1 −1 | −1 +1 −1 +1 −1 +1 −1 +1 |
| W2  | +1 +1 −1 −1 +1 +1 −1 −1 | −1 −1 +1 +1 −1 −1 +1 +1 |
| W3  | +1 −1 −1 +1 +1 −1 −1 +1 | −1 +1 +1 −1 −1 +1 +1 −1 |
| W4  | +1 +1 +1 +1 −1 −1 −1 −1 | −1 −1 −1 −1 +1 +1 +1 +1 |
| W5  | +1 −1 +1 −1 −1 +1 −1 +1 | −1 +1 −1 +1 +1 −1 +1 −1 |
| W6  | +1 +1 −1 −1 −1 −1 +1 +1 | −1 −1 +1 +1 +1 +1 −1 −1 |
| W7  | +1 −1 −1 +1 −1 +1 +1 −1 | −1 +1 +1 −1 +1 −1 −1 +1 |

400

HOPPING
CONTROLLER

423

# FIG. 6

EP 0 902 549 B1

421    422

| | | | | | | | | | | | | | | | | | | | | | | | | |
|---|---|---|---|---|---|---|---|---|---|---|---|---|---|---|---|---|---|---|---|---|---|---|---|---|
| H0 | +1 | +1 | +1 | +1 | +1 | +1 | +1 | +1 | +1 | +1 | +1 | +1 | −1 | −1 | −1 | −1 | −1 | −1 | −1 | −1 | −1 | −1 | −1 | −1 |
| H1 | +1 | +1 | +1 | +1 | −1 | −1 | +1 | −1 | −1 | +1 | −1 | −1 | −1 | −1 | −1 | −1 | −1 | +1 | −1 | +1 | +1 | −1 | +1 | +1 |
| H2 | +1 | +1 | +1 | −1 | −1 | +1 | −1 | −1 | +1 | −1 | −1 | +1 | −1 | −1 | −1 | +1 | +1 | −1 | +1 | +1 | −1 | +1 | +1 | −1 |
| H3 | +1 | −1 | +1 | −1 | +1 | −1 | −1 | −1 | −1 | +1 | +1 | +1 | −1 | +1 | −1 | +1 | −1 | +1 | +1 | +1 | +1 | −1 | −1 | −1 |
| H4 | +1 | +1 | −1 | −1 | +1 | −1 | −1 | +1 | +1 | +1 | −1 | −1 | −1 | −1 | +1 | +1 | −1 | +1 | +1 | −1 | −1 | −1 | +1 | +1 |
| H5 | +1 | −1 | −1 | +1 | −1 | +1 | −1 | −1 | +1 | +1 | +1 | −1 | −1 | +1 | +1 | −1 | +1 | −1 | +1 | +1 | −1 | −1 | −1 | +1 |
| H6 | +1 | −1 | +1 | +1 | +1 | +1 | −1 | +1 | −1 | −1 | −1 | −1 | −1 | +1 | −1 | −1 | −1 | −1 | +1 | −1 | +1 | +1 | +1 | +1 |
| H7 | +1 | +1 | −1 | +1 | −1 | −1 | −1 | +1 | −1 | −1 | +1 | +1 | −1 | −1 | +1 | −1 | +1 | +1 | +1 | −1 | +1 | +1 | −1 | −1 |
| H8 | +1 | −1 | −1 | +1 | +1 | −1 | +1 | −1 | +1 | −1 | −1 | +1 | −1 | +1 | +1 | −1 | −1 | +1 | −1 | +1 | −1 | +1 | +1 | −1 |
| H9 | +1 | −1 | +1 | −1 | −1 | −1 | +1 | +1 | +1 | −1 | +1 | −1 | −1 | +1 | −1 | +1 | +1 | +1 | −1 | −1 | −1 | +1 | −1 | +1 |
| H10 | +1 | +1 | −1 | −1 | +1 | +1 | +1 | −1 | −1 | −1 | +1 | −1 | −1 | −1 | +1 | +1 | −1 | −1 | −1 | +1 | +1 | +1 | −1 | +1 |
| H11 | +1 | −1 | −1 | −1 | −1 | +1 | +1 | +1 | −1 | +1 | −1 | +1 | −1 | +1 | +1 | +1 | +1 | −1 | −1 | −1 | +1 | −1 | +1 | −1 |

HOPPING CONTROLLER

400

423

# FIG. 7

ch.1 ——————————————— 811

ch.2 ——————————————— 812

ch1 x H0 ——————————————— 813

ch2 x H1 ——————————————— 814

ch1 x H0
+
ch2 x H1 ——————————————— 815

(ch1 x H0 +
ch2 x H1) x————————————— 821
H0

INTEGRATED———————————————— 822

(ch1 x H0 +
ch2 x H1) x————————————— 823
H1

INTEGRATED———————————————— 824

# FIG. 8